# EUROPÄISCHE PATENTSCHRIFT

(11) **EP 3 819 097 B1**
(45) Veröffentlichungstag und Bekanntmachung des Hinweises auf die Patenterteilung: **18.05.2022**
(21) Anmeldenummer: 20199994.3
(22) Anmeldetag: 05.10.2020
(51) Int. Cl.: B29C 45/78, B67C 3/00, G01B 11/06

(54) **PRÜFSYSTEM ZUR PRÜFUNG VON BEHÄLTERN, ABFÜLLANLAGE MIT EINEM DERARTIGEN PRÜFSYSTEM**
TEST SYSTEM FOR TESTING CONTAINERS, FILLING SYSTEM WITH SUCH A TESTING SYSTEM
SYSTÈME D'ESSAI DESTINÉ AUX ESSAIS DES RÉCIPIENTS, INSTALLATION DE REMPLISSAGE DOTÉ D'UN TEL SYSTÈME D'ESSAI

(30) Priorität: 05.11.2019 DE 102019129726
(43) Veröffentlichungstag der Anmeldung: 12.05.2021
(73) Patentinhaber: SICK AG, 79183 Waldkirch (DE)
(72) Erfinder: SCHWARTZKOPFF, Tijl, 79108 Freiburg (DE); BRAUNE, Ingolf, 79194 Gundelfingen (DE)
(74) Vertreter: Manitz Finsterwald Patent- und Rechtsanwaltspartnerschaft mbB

(56) Entgegenhaltungen:
- EP-A2- 0 978 710
- WO-A1-2013/119999
- WO-A1-2019/038612
- DE-A1-102005 037 101
- DE-A1-102016 117 870
- DE-A1-102017 120 612
- DE-A1-102017 120 863
- US-A1- 2012 018 925
- US-A1- 2013 309 343

## Beschreibung

Die vorliegende Erfindung betrifft ein Prüfsystem zur Prüfung von zu befüllenden transparenten Behältern, wobei die Prüfung dazu vorgesehen ist, instabile Behälter zu identifizieren.

Bei der Abfüllung von fließfähigen Produkten, beispielsweise von flüssigen oder auch pulverförmigen Produkten, in Behälter aus Glas oder Kunststoff, insbesondere in Flaschen, die als Transport- und/oder Verkaufsverpackung dienen sollen, kommen in der Regel vollautomatisierte Abfüllanlagen zum Einsatz. Neben der eigentlichen Füllvorrichtung, welche das abzufüllende Produkt in die Behälter einleitet, können noch weitere Vorrichtungen vorhanden sein, die entlang einer Förderstrecke angeordnet sind, welche die zu befüllenden Behälter der Füllvorrichtung zuführt und die befüllten Behälter abtransportiert. Insbesondere wenn es sich bei den zu befüllenden Behältern um Mehrwegbehälter handelt, ist der Füllvorrichtung in der Regel eine Reinigungsvorrichtung vorgeschaltet, welche die zu befüllenden Behälter von Verschmutzungen reinigt.

Zur Kontrolle des Reinigungserfolges, insbesondere zur Kontrolle auf nicht zu reinigende Verschmutzungen oder sperrige Fremdkörper im Inneren des Behälters einerseits und zum Erkennen von beschädigten Behältern, bei denen beispielsweise Risse oder Abplatzungen im Mündungsbereich des Behälters oder am Behälterkörper vorhanden sind, kann eine entsprechende Inspektionsvorrichtung vorgesehen sein. Eine derartige Inspektionsvorrichtung wird auch als EBI (von Englisch: Empty Bottle Inspector) bezeichnet.

Während des Füllprozesses werden die Behälter oftmals mit Überdruck beaufschlagt. Eine solche Druckbeaufschlagung tritt beispielsweise bei der Befüllung von Flaschen mit kohlensäurehaltigen Getränken auf. Um ein Aufschäumen und/oder Entgasen des Füllguts zu verhindern, kann der Druck in dem Behälter bereits vor dem Befüllen erhöht werden, was auch als Vorspannen bezeichnet werden kann. Häufig werden Behälter vor ihrer Befüllung auch mit einem Spülgas, beispielsweise Kohlendioxid, gespült und ggf. auch vorgespannt, um zum Schutz des Füllguts eine sauerstoffarme oder sauerstofffreie Atmosphäre vor der eigentlichen Befüllung herzustellen. Des Weiteren können während des gesamten Füllprozesses Temperaturunterschiede auftreten, die die Behälter ebenfalls strukturell belasten.

Eine Gefahr besteht darin, dass insbesondere bei einer Druckbeaufschlagung von Behältern während des Vorspannens und/oder des eigentlichen Füllvorgangs einzelne Behälter platzen können. Durch derartige Behälter- oder Flaschenplatzer kann die Produktivität des Abfüllprozesses unerwünscht reduziert werden und sogar schwerwiegende Maschinenschäden und somit lange Ausfallzeiten der Abfüllanlage zur Folge haben. Da eine Füllvorrichtung einer Abfüllanlage zumeist mehrere Füllventile aufweist, um den Durchsatz zu erhöhen, besteht durch einen Behälterplatzer zudem die Gefahr, dass beim Platzen eines Behälters entstehende Materialsplitter benachbarte Füllventile oder die Außenwände benachbarter Behälter kontaminieren. Dies stellt eine erhebliche Gefahr für den Endverbraucher dar.

In der Regel weisen Abfüllanlagen Detektionsvorrichtungen auf, die das Auftreten eines Behälterplatzers erkennen können. Wenn ein solches Schadereignis detektiert wurde, werden das betroffene Füllventil und auch benachbarte Füllventile abgespült oder abgeschwallt, um gegebenenfalls anhaftende Behältersplitter zu entfernen. Diejenigen Behälter, die sich bei einem Platzereignis in der Nachbarschaft des geplatzten Behälters befanden, werden aus Sicherheitsgründen ausgeleitet und verworfen. Dies kann bis zu 20 oder mehr Behälter betreffen.

Neben der Erkennung von fehlerhaften Behältern, also insbesondere erkennbar beschädigten oder nicht sauberen Behältern, durch die genannte Inspektionsvorrichtung besteht daher ein Bedürfnis, auch instabile Behälter zu erkennen. Unter instabilen Behältern werden insbesondere solche Behälter verstanden, die aufgrund von strukturellen Mängeln oder Verschleiß eine nicht ausreichende Druck- und/oder Temperaturbeständigkeit aufweisen und daher platzgefährdet sind (also gegebenenfalls eine erhöhte Gefahr des Platzens aufweisen).

Mit anderen Worten besteht für instabile Behälter eine erhöhte Wahrscheinlichkeit, dass diese zum Beispiel unter Druckeinfluss beim Füllvorgang platzen. Zur Vermeidung der vorstehend beschriebenen Schadereignisse soll eine Möglichkeit geschaffen werden, solche instabilen (und daher platzgefährdeten) Behälter rechtzeitig zu erkennen und vor Auftreten eines Schadereignisses aus dem Füllprozess auszuleiten.

DE 10 2017 120 863 A1 und DE 10 2016 117 870 A1 beschreiben Verfahren zur Herstellung von Behältern aus Vorformlingen aus thermoplastischem Material sowie entsprechende Blasvorrichtungen. DE 10 2005 037 101 A1 betrifft ein Verfahren und eine Vorrichtung zur Erfassung der Wandstärke eines Behälters.

EP 0 978 710 A2 offenbart ein Verfahren zur flächendeckenden Wandstärkenmessung eines lichtdurchlässigen Hohlkörpers. US 2013/309343 A1 betrifft die Inspektion von zu behandelnden Behältern mittels Prüfeinrichtungen, wobei defekte Behälter aufgrund der Testergebnisse aussortiert werden können.

Es ist daher eine Aufgabe der Erfindung, ein Prüfsystem zur Prüfung von zu befüllenden transparenten Behältern in einer Abfüllanlage anzugeben, wobei die Prüfung dazu vorgesehen ist, instabile Behälter zu identifizieren.

Die Lösung der Aufgabe erfolgt durch ein Prüfsystem mit den Merkmalen des Anspruchs 1. Vorteilhafte Ausgestaltungen der Erfindung ergeben sich aus den Unteransprüchen, der Beschreibung und den Zeichnungen.

Ein erfindungsgemäßes Prüfsystem zur Prüfung von zu befüllenden transparenten Behältern (insbesondere aus Glas oder Kunststoff) in einer Abfüllanlage, wobei die Prüfung dazu vorgesehen ist, instabile Behälter zu identifizieren, umfasst zumindest einen Wandstärkesensor, welcher dazu eingerichtet ist, zumindest die Wandstärke eines zu prüfenden Behälters zu erfassen und zumindest einen die Wandstärke repräsentierenden Wandungsparameter auszugeben, und eine Auswerteeinheit, welche mit dem zumindest einen Wandstärkesensor gekoppelt ist und mit der Abfüllanlage koppelbar ist. Die Auswerteeinheit ist dazu eingerichtet, (i) von dem zumindest einen Wandstärkesensor den zumindest einen Wandungsparameter und von der Abfüllanlage zumindest einen von dem Wandungsparameter verschiedenen Behälterparameter und/oder zumindest einen Prozessparameter zu empfangen, (ii) auf der Grundlage des zumindest einen Wandungsparameters und zusätzlich auf der Grundlage des zumindest einen Behälterparameters und/oder des zumindest einen Prozessparameters unter Anwendung eines Prüfalgorithmus den zu prüfenden Behälter hinsichtlich seiner Stabilität zu klassifizieren und (iii) ein Instabilitätssignal auszugeben, wenn der geprüfte Behälter als instabil klassifiziert wurde.

Das Prüfsystem ist mit der Abfüllanlage, d.h. insbesondere mit einer oder mehreren Komponenten der Abfüllanlage direkt oder indirekt koppelbar, um von der Abfüllanlage bzw. deren Komponente die genannten Behälter- und/oder Prozessparameter und bevorzugt auch weitere Steuer- oder Messsignale zu empfangen. Ferner können bevorzugt auch Steuersignale, insbesondere das genannte Instabilitätssignal oder andere Signale, beispielsweise Messwerte, an diese Komponenten übermittelt werden. Eine direkte Kopplung kann beispielsweise über entsprechende Leitungen erfolgen. Eine indirekte Kopplung kann beispielsweise über ein Bussystem und/oder eine Steuereinheit der Abfüllanlage erfolgen, welche wiederum Steuer- und/oder Messsignale von den Komponenten empfängt und/oder an diese übermittelt. Auch über eine übergeordnete Prozesssteuereinheit, welche beispielsweise mehrere Abfüllanlagen steuert, kann eine derartige indirekte Kopplung erfolgen. Die Steuer- und/oder Messsignale können auch zwischengespeichert oder gegebenenfalls weiterverarbeitet sein.

Der genannte Behälterparameter unterscheidet sich von dem Wandungsparameter und umfasst zum Beispiel Verschleißparameter wie den sogenannten Zerkratzungsgrad (auch als Scuffing-Grad bezeichnet) oder Beschädigungsparameter wie kleinere Risse, Kratzer oder Eintrübungen des Behälters, die für sich genommen noch kein Ausleitungskriterium darstellen. Der Zerkratzungsgrad beschreibt den Zustand der Behälteroberfläche, wobei zu dessen Ermittlung insbesondere bei Mehrwegbehältern oder Mehrwegflaschen etwas exponierte umlaufende Wandungsbereiche des Behälters untersucht werden, die während des Füllprozesses oder des Transports regelmäßig mit entsprechenden Wandungsbereichen benachbarter Behälter oder anderen Strukturen in Berührung kommen können. Die Behälteroberfläche wird insbesondere in den exponierten Wandungsbereichen mit jedem Umlauf zunehmend verkratzt, so dass sich die Oberflächenrauigkeit erhöht und als Maß für einen Verschleiß herangezogen werden kann. Die genannten Behälterparameter können insbesondere von der eingangs genannten Inspektionsvorrichtung ("EBI") ermittelt werden.

Bei dem genannten Prozessparameter kann es sich beispielsweise um den Reinigungsmitteldruck und/oder die Reinigungsmitteltemperatur handeln, mit welchen die zu befüllenden Behälter vorab gereinigt werden. Weitere Prozessparameter stellen der Fülldruck und/oder die Fülltemperatur des Füllguts während des eigentlichen Füllvorgangs dar. Auch der Vorspanndruck bzw. der Druck eines eventuell angewendeten Spülgases kann als Prozessparameter herangezogen werden.

Der oder die Wandungsparameter sowie der oder die zusätzlichen Behälter- und/oder Prozessparameter werden innerhalb des Prüfalgorithmus verarbeitet, um den zu prüfenden Behälter hinsichtlich seiner Stabilität zu klassifizieren. Das Klassifizieren kann insbesondere auch als das Ermitteln einer Wahrscheinlichkeit dafür angesehen werden, dass unter den gegebenen Füllbedingungen ein Schadereignis, d.h. insbesondere ein Platzen oder Reißen des Behälters, auftreten kann.

Wenn ein Behälter aufgrund der durch den Prüfalgorithmus definierten Kriterien als instabil klassifiziert wurde, wird ein Instabilitätssignal ausgegeben, welches die Ausleitung oder Entfernung des als instabil klassifizierten Behälters aus dem Füllprozess und/oder dessen Nichtbefüllung veranlasst. Das Instabilitätssignal kann beispielsweise in Form eines Ausleitungssignals an eine entsprechende Ausleitungsvorrichtung übermittelt werden, insbesondere an eine Ausleitungsvorrichtung, welche zugleich auch zum Ausleiten derjenigen Behälter vorgesehen ist, welche von einer Inspektionsvorrichtung als fehlerhaft im Sinne der vorstehend erläuterten Definition klassifiziert wurden. Das Instabilitätssignal kann auch in Form eines Nichtverwendungssignals an eine nachgeordnete Füllvorrichtung übermittelt werden, wobei der als instabil klassifizierte Behälter zwar an die Füllvorrichtung übergeben wird, ein Vorspannen und/oder Befüllen dieses Behälters durch entsprechende Ansteuerung der Füllventile jedoch unterbleibt. Der nicht befüllte Behälter kann dann ebenso wie andere auszusortierende Behälter, z.B. nur teilweise befüllte Behälter, mittels einer entsprechenden, der Füllvorrichtung nachgeordneten Ausleitungs- oder Sortiervorrichtung aussortiert oder ausgeleitet werden.

Mit dem erfindungsgemäßen Prüfsystem wird es es insbesondere möglich, im Rahmen eines in einer Abfüllanlage durchgeführten Abfüllverfahrens die zu befüllenden Behälter individuell und unabhängig von anderen vorgängig durchgeführten Kontrollen auf ihre Eignung für den vorgesehenen Abfüllprozess insbesondere unter Berücksichtigung der zu erwartenden prozessspezifischen Belastungen zu prüfen. Durch das in das Abfüllverfahren integrierbare Prüfsystem können sowohl fabrikneue Einweg- und Mehrwegbehälter als auch bereits benutzte, zur Wiederbefüllung vorgesehene Mehrwegbehälter mit den gleichen Kriterien innerhalb des Abfüllverfahrens und damit zeitnah zum eigentlichen Füllvorgang geprüft werden, so dass etwaige stabilitätsrelevante Verschlechterungen des Behälterzustands zwischen dem Prüfzeitpunkt und dem Füllzeitpunkt aufgrund von Transport- oder Lagerungseinflüssen weitgehend ausgeschlossen werden können.

Gemäß einer vorteilhaften Ausführungsform umfasst der Wandstärkesensor zumindest einen Sensorkopf, welcher als Triangulationswandstärkendetektor oder als konfokaler chromatischer Wandstärkendetektor ausgebildet ist. Bei einem Triangulationswandstärkendetektor wird ein fokussierter Lichtstrahl schräg auf die Wandung eines zu prüfenden Behälters eingestrahlt und das reflektierte Licht von einem ortsauflösenden Detektor detektiert. Dabei erfolgt sowohl an der Außenwandung als auch an der Innenwandung eine anteilige Reflexion des Lichtstrahls. Aufgrund der schrägen Einfall- und Ausfallwinkel weisen die entsprechenden detektierten Lichtflecke einen Abstand zueinander auf, welcher ein Maß für die Wandstärke des Behälters darstellt. Bei einem konfokalen chromatischen Wandstärkendetektor wird weißes Licht mit Hilfe einer stark dispersiven Optik auf die Wandung des zu prüfenden Behälters fokussiert. Das reflektierte Licht wird fokussiert und durch eine Lochblende ("pinhole") geleitet und anschließend von einem spektral auflösenden Detektor detektiert. In Abhängigkeit von dem Abstand des Reflexionsortes an der Behälterwandung und damit auch von der Wandstärke wird aufgrund der Dispersion nur ein bestimmter Spektralbereich scharf abgebildet. Bei defokussierten Wellenlängenbereichen kann nur ein Bruchteil des reflektierten Lichts die Lochblende passieren, so dass aus dem Spektrum des detektierten Lichts die Wandstärke ermittelt werden kann.

Vorteilhafterweise umfasst der Wandstärkesensor mehrere Sensorköpfe, welche voneinander beabstandet angeordnet sind, um die Wandstärke des zu prüfenden Behälters an verschiedenen Positionen, insbesondere an verschiedenen Höhenpositionen zu erfassen. Im letztgenannten Fall ist es vorteilhaft, wenn die Sensorköpfe vertikal voneinander beabstandet angeordnet sind. Durch die Erfassungen der Wandstärke an verschiedenen Positionen können auch solche instabilen Behälter erkannt werden, bei denen eine strukturelle Schwächung nur in begrenzten lokalen Bereichen vorhanden ist und die Wandstärke in anderen Bereichen eigentlich den Kriterien für eine Klassifizierung des Behälters als stabil genügen würde.

Gemäß einer weiteren vorteilhaften Ausführungsform ist der Wandstärkesensor dazu eingerichtet, zumindest die Wandstärke des zu prüfenden Behälters an verschiedenen Umfangspositionen zu erfassen. Benachbarte Umfangspositionen können beispielsweise einen Winkelabstand von jeweils 45° aufweisen. Die Wandstärke kann beispielsweise an zwei, drei oder auch mehr Umfangspositionen ermittelt werden.

In dem Zusammenhang hat es sich als vorteilhaft erwiesen, wenn der Wandstärkesensor dazu eingerichtet ist, an den verschiedenen Umfangspositionen jeweils zusätzlich den Abstand zwischen dem Wandstärkesensor und einer Innen- und/oder Außenwandung des zu prüfenden Behälters zu erfassen, wobei die Auswerteeinheit oder der Wandstärkesensor dazu eingerichtet ist, auf der Grundlage der erfassten Abstände zumindest einen weiteren Wandungsparameter zu ermitteln, welcher das Maß der Exzentrizität der Innen- und/oder Außenwandung repräsentiert. Dieser weitere Wandungsparameter, der auch als Exzentrizitätsparameter bezeichnet werden kann, stellt somit neben der Wandstärke ebenfalls ein Kriterium dar, das in dem Prüfalgorithmus berücksichtigt werden kann.

Die Ermittlung des Exzentrizitätsparameters erfolgt sinnvollerweise hauptsächlich bei Behältern mit einem eigentlich kreisförmigen bzw. rotationssymmetrischen Querschnitt. Dem liegt die Erfahrung zugrunde, dass unrunde, also exzentrische Behälter eher zum Platzen neigen als perfekt rotationssymmetrische Behälter.

Gemäß einer weiteren vorteilhaften Ausführungsform umfasst der Wandstärkesensor zumindest einen Sensorkopf, welcher entlang einer Kreisbahn oder eines Kreisbahnabschnitts schwenkbar ist, wobei der Mittelpunkt der Kreisbahn oder des Kreisbahnabschnitts auf einer vertikalen Symmetrieachse des zu prüfenden Behälters angeordnet ist. Mit anderen Worten "kreist" der Sensorkopf mit gleichbleibendem Abstand um den Behälter. Dadurch kann mit einer geringen Anzahl von Sensorköpfen die Wandstärke an verschiedenen Umfangspositionen entlang der Kreisbahn oder des Kreisbahnabschnitts erfasst werden und insbesondere auch der Exzentrizitätsparameter ermittelt werden. Zusätzlich kann der Sensorkopf auch höhenverstellbar sein, um die Wandstärke zusätzlich auch an verschiedenen Höhen- oder Vertikalpositionen zu erfassen.

Alternativ kann eine Erfassung der Wandstärke an verschiedenen Umfangspositionen auch durch eine Rotation des zu prüfenden Behälters um seine Hochachse erfolgen, wobei in dem Fall der oder die Sensorköpfe zweckmäßiger Weise feststehend oder lediglich höhenverstellbar angeordnet sind und eine Schwenkbarkeit entlang einer Kreisbahn nicht vorgesehen ist.

Alternativ kann der Wandstärkesensor auch mehrere Sensorköpfe umfassen, die entlang des Umfangs des zu prüfenden Behälters verteilt angeordnet sind.

Vorteilhafterweise ist die Auswerteeinheit dazu eingerichtet, den zu prüfenden Behälter zusätzlich auf der Grundlage eines Behältertypparameters zu klassifizieren, welcher von der Abfüllanlage und/oder einer mit dem Prüfsystem verbundenen Eingabevorrichtung empfangen wurde. Bei der Klassifikation können also ein oder mehrere Behältertypparameter berücksichtigt werden, wobei Beispiele für einen jeweiligen Behältertypparameter die Größe, die Farbe, die Form, das Material oder eine Soll- oder Mindestwandstärke sind. Somit stellt der Behältertypparameter, welcher sich von dem genannten Behälterparameter unterscheidet, einen weiteren Parameter für die Klassifizierung der zu prüfenden Behälter dar. In der Regel sind ein oder mehrere Behältertypparameter bereits an oder in der Abfüllanlage eingestellt oder einstellbar und können von dem Prüfsystem ausgelesen oder abgefragt werden. Sollte dies nicht möglich oder erwünscht sein, können Behältertypparameter auch mit einer entsprechenden, mit dem Prüfsystem verbundenen Eingabevorrichtung an das Prüfsystem übermittelt werden. Hierfür können in der Eingabevorrichtung beispielsweise Behältertypparameter einzeln eingestellt werden, insbesondere (alpha-)nummerisch oder durch Auswahl aus jeweiligen Parameterlisten, oder es kann ein Behältertyp aus einer Auswahlliste ausgewählt werden, in welcher für verschiedene Behältertypen die jeweiligen Behältertypparameter hinterlegt sind.

Gemäß einer weiteren vorteilhaften Ausführungsform der Erfindung wird in dem Prüfalgorithmus für jeden bei der Klassifizierung zu berücksichtigenden Parameter eine jeweilige Grenzwertüberprüfung durchgeführt, wobei jeweils geprüft wird, ob ein oder mehrere für den jeweiligen Parameter definierte Grenzwerte über- oder unterschritten wurden. Das Klassifizieren des zu prüfenden Behälters hinsichtlich seiner Stabilität erfolgt auf der Grundlage einer regelbasierten Kombination der Ergebnisse der durchgeführten Grenzwertüberprüfungen. Für die zu berücksichtigenden Parameter, d.h. Wandstärkeparameter, Exzentrizitätsparameter, Behälterparameter, Behältertypparameter und/oder Prozessparameter, werden als Prüfkriterien ein oder mehrere verschiedene Grenzwerte fest oder dynamisch definiert, die dann in geeigneter Weise abgeprüft werden.

Diese Vorgehensweise soll nachfolgend anhand eines vereinfachten Beispiels erläutert werden. In diesem Beispiel soll die Klassifikation auf der Grundlage von drei Parametern erfolgen, nämlich dem Scuffing-Grad S als Behälterparameter, der Wandstärke als Wandungsparameter und der Soll-Wandstärke als Behältertypparameter, wobei in der Auswertung eine relative Wandstärke W betrachtet wird, welche der ermittelten Wandstärke dividiert durch Soll-Wandstärke entspricht (in Prozent angegeben). Bei dem Scuffing-Grad S handelt es sich ebenfalls um eine relative Größe, wobei auf einer Skala von 1 bis 10 ansteigende Werte einen höheren Verschleißgrad kennzeichnen.

So kann ein Punktesystem für den Scuffing-Grad S verschiedene Grenzwerte aufweisen, für die gemäß den folgenden Regeln Punkte für den Scuffing-Grad S vergeben werden: S ≤ 2: 15 Punkte, S > 2 und ≤ 3: 10 Punkte, S > 3 und ≤ 4: 5 Punkte, S > 4: 0 Punkte. Für die relative Wandstärke W werden gemäß den folgenden Regeln ebenfalls Punkte vergeben: W ≥ 80%: 15 Punkte, W ≥ 60% und < 80%: 10 Punkte, W < 60%: 0 Punkte.

Diese Punkteregeln werden derart kombiniert, dass der Behälter als stabil klassifiziert wird, wenn die Summe der Punkte ≥ 20 Punkte ist und der Behälter als instabil klassifiziert wird, wenn die Summe der Punkte < 20 Punkte ist oder wenigstens einer der Parameter 0 Punkte aufweist.

In dem Zusammenhang hat es sich als vorteilhaft erwiesen, wenn ein jeweiliger Grenzwert für eine Grenzwertüberprüfung eines bestimmten Parameters auf der Grundlage eines Wertes eines anderen Parameters oder eines Ergebnisses der Grenzwertüberprüfung eines anderen Parameters definiert wird. Mit anderen Worten sind die Grenzwerte nicht fest in dem Prüfalgorithmus vorgegeben, sondern können regelbasiert dynamisch an andere Parameter angepasst werden.

Auch dies soll beispielhaft erläutert werden. In Abwandlung des vorstehend beschriebenen Beispiels kann als weiterer zu berücksichtigender Parameter der Fülldruck als Prozessparameter herangezogen werden. So kann beispielsweise vorgesehen sein, dass die Grenzen für die relative Wandstärke W so wie oben beschrieben gelten, wenn der Fülldruck ≤ 2 bar beträgt. Beträgt der Fülldruck hingegen mehr als 2 bar, so werden die für die relative Wandstärke zu vergebenden Punkte wie folgt definiert: W ≥ 85%: 15 Punkte, W ≥ 65% und < 85%: 10 Punkte, W ≤ 65%: 0 Punkte.

Gemäß einer alternativen Ausführungsform können die im Prüfalgorithmus implementierten Klassifizierungsregeln auch auf der Grundlage von oder mehreren algebraischen Funktionen definiert sein.

Bei der Erfindung ist die Auswerteeinheit mit einem Schaderkennungssystem verbunden, welches dazu eingerichtet ist, einen durch ein Befüllen eines Behälters verursachten Behälterschaden als Schadereignis zu erfassen, wobei die Auswerteeinheit dazu eingerichtet ist, den Prüfalgorithmus auf der Grundlage eines einzelnen Schadereignisses oder einer Mehrzahl von Schadereignissen, insbesondere auf der Grundlage einer aus der Mehrzahl von Schadereignissen und einer Gesamtzahl von befüllten Behältern ermittelten Schadquote, derart anzupassen, dass die Erkennung von instabilen Behältern verbessert ist. Unter einem Behälterschaden wird insbesondere ein Platzen oder Reißen des Behälters während des Reinigens, des Vorspannens oder unmittelbar vor oder während des Füllvorgangs verstanden.

Das Ermitteln der Schadquote kann sich insbesondere auf einen bestimmten Zeitraum beziehen, so dass die Schadquote einer Anzahl von Schadereignissen pro Zeitraum dividiert durch die Gesamtanzahl von Füllvorgängen in diesem Zeitraum entspricht. Zur Anpassung des Prüfalgorithmus, insbesondere der Grenzwerte des Prüfalgorithmus, auf der Grundlage von einzelnen Schadereignissen ist eine Behälterverfolgung sinnvoll, die es ermöglicht, die für einen beschädigten Behälter zuvor ermittelten Parameter zu identifizieren und auf der Grundlage dieser Parameter den Prüfalgorithmus anzupassen, d.h. beispielsweise die Grenzwerte oder die Regeln für die regelbasierte Kombination anzupassen. In diesem Zusammenhang bedeutet die Verbesserung der Erkennung von instabilen Behältern, die Schadquote zu vermindern, d.h. die Quote von falsch positiven Klassifizierungen von Behältern zu reduzieren. Hierdurch wird also ein selbstlernender Prüfalgorithmus implementiert.

Vorteilhafterweise erfolgt in diesem Zusammenhang das Anpassen des Prüfalgorithmus zusätzlich auf der Grundlage einer Ausleitungsquote, welche das Verhältnis der Anzahl von als instabil klassifizierten Behältern zu der Gesamtzahl an in einem vorgegeben Zeitraum überprüften oder befüllten Behältern angibt. Hierzu ist anzumerken, dass bei einer Verbesserung der Erkennung von instabilen Behältern, die alleine darauf ausgerichtet ist, die Schadquote zu reduzieren, die Möglichkeit besteht, dass sich mit der Zeit die Ausleitungsquote über ein erwünschtes Maß hinaus erhöht. Dies birgt die Gefahr, dass auch solche Behälter als instabil klassifiziert werden, die an sich nicht platzgefährdet sind. Somit wird der selbstlernende Prüfalgorithmus um ein zusätzliches Kriterium erweitert, das die Verringerung von falsch-negativen Klassifizierungen zum Ziel hat.

Derartige Ausgestaltungen zur Anpassung des Prüfalgorithmus stellen somit eine Form maschinellen Lernens dar, welche auch als bestärkendes Lernen (engl. "reinforcement learning") bezeichnet werden kann. Ein durch den Prüfalgorithmus definierter Klassifikator erhält eine positive Rückmeldung, wenn ein Behälter den Füllprozess ohne Beschädigung übersteht und eine negative Rückmeldung, wenn der Behälter während des Füllens platzt. Um ein Ansteigen der Ausleitungsquote über ein erwünschtes Maß hinaus zu vermeiden, bewirkt die Ausleitungsquote ebenfalls eine negative Rückkopplung. Um das gewünschte Optimierungsziel, weder eigentlich stabile Behälter auszusortieren noch an sich instabile Behälter passieren zu lassen, zu erreichen, kann vorgesehen sein, dass die negative Rückmeldung eines Schadereignisses stärker gewichtet wird als die Ausleitungsquote.

Sollte eine Flaschenverfolgung vom Inspektionssystem über das Prüfsystem bis zur Füllvorrichtung nicht gegeben sein oder nicht möglich sein, kann eine Verbesserung des Prüfalgorithmus durch maschinelles Lernen über statistische Methoden erfolgen. Der Prüfalgorithmus wird also nicht auf der Grundlage von individuellen Ereignissen beim Füllvorgang angepasst ("Schadereignis oder kein Schadereignis"), sondern auf der Basis der Schadquote und der Ausleitungsquote.

Vorteilhafterweise können derartige optimierte Prüfalgorithmen auch bereitgestellt werden, um andere gleichartige Prüfsysteme zu optimieren oder für ein neu zu installierendes Prüfsystem einen bereits etablierten Start-Prüfalgorithmus zur Verfügung zu haben. Der Austausch von Prüfalgorithmen oder Parametern, welche die Prüfalgorithmen charakterisieren, kann netzwerkbasiert über eine Datenbank erfolgen ("Cloud").

Gemäß einer weiteren vorteilhaften Ausführungsform ist vorgesehen, dass das Prüfsystem in ein Inspektionssystem zur Inspektion von zu befüllenden transparenten Behältern integriert ist, welches zusätzlich zu dem Prüfsystem zumindest eine Inspektionsvorrichtung umfasst, welche dazu eingerichtet ist, zumindest einen Behälterparameter und/oder einen weiteren, den Zustand des Behälters charakterisierenden Parameter zu ermitteln. Es wird somit ein integriertes Inspektionssystem geschaffen, welches sowohl eine Inspektionsvorrichtung zur Detektion fehlerhafter Behälter als auch das erfindungsgemäße Prüfsystem zur Detektion instabiler Behälter umfasst. Während die Inspektionsvorrichtung den oder die Behälterparameter ermittelt, die nicht den genannten Wandungsparameter darstellen, ermittelt das Prüfsystem den oder die Wandungsparameter. Der genannte weitere, den Zustand des Behälters charakterisierende Parameter ist ebenfalls kein Wandungsparameter, sondern kann beispielsweise Verschmutzungen oder im Behälter eingeschlossene Fremdkörper repräsentieren.

Die Erfindung betrifft ferner eine Abfüllanlage zum Abfüllen von Produkten in Behältern, umfassend ein Prüfsystem zur Prüfung der zu befüllenden Behälter nach einer der vorstehend genannten erfindungsgemäßen oder vorteilhaften Ausführungsformen. Bei der genannten Abfüllanlage handelt es sich beispielsweise um eine Abfüllanlage zum Abfüllen von fließfähigen Produkten in flüssiger oder pulverförmiger Form. Insbesondere handelt es sich um eine Abfüllanlage zum Abfüllen von Lebensmitteln in Behältern, insbesondere zum Abfüllen von Getränken in Flaschen.

Eine vorteilhafte Ausführungsform der Abfüllanlage umfasst eine Förderstrecke zum Fördern der zu befüllenden Behälter in einer Förderrichtung, an welcher in einer in Förderrichtung verlaufenden Reihenfolge zumindest (i) eine Inspektionsvorrichtung zur Inspektion der zu befüllenden Behälter, welche dazu eingerichtet ist, zumindest einen Behälterparameter und/oder zumindest einen weiteren, einen Zustand des Behälters charakterisierenden Parameter zu ermitteln und auf der Grundlage des Behälterparameters und/oder des weiteren Parameters fehlerhafte Behälter zu identifizieren, (ii) der Wandstärkesensor des Prüfsystems und (iii) eine Ausleitungsvorrichtung zum Ausleiten fehlerhafter und/oder instabiler Behälter aus der Förderstrecke angeordnet sind. Wie eingangs bereits erläutert wurde, werden in diesem Zusammenhang nur solche Behälter als fehlerhafte Behälter bezeichnet, zu deren Erkennung die Inspektionsvorrichtung ausgebildet ist. Kriterien für fehlerhafte Behälter sind insbesondere eine Beschädigung der Mündung, nicht zu reinigende Verschmutzungen wie beispielsweise im Behälter eingeschlossene sperrige Fremdkörper, der Zerkratzungsgrad (Scuffing-Grad) durch Kratzer, Schleifspuren und sonstige Oberflächenfehler und Risse oder Schäden im Behälterkörper. Eine zu geringe Wandstärke ist alleine betrachtet kein Kriterium für einen fehlerhaften Behälter im Sinne dieser Definition. Der Wandstärkesensor des Prüfsystems ist zwischen der Inspektionsvorrichtung und der Ausleitungsvorrichtung angeordnet, wodurch sich der Vorteil ergibt, dass die Ausleitungsvorrichtung, zusätzlich auch für die Ausleitung der als instabil klassifizierten Behälter genutzt werden kann. Die Abfüllanlage kann zusätzlich eine Reinigungsvorrichtung umfassen, welche vorteilhafterweise in Förderrichtung betrachtet vor der Inspektionsvorrichtung angeordnet ist. Die Abfüllanlage kann ferner zusätzlich eine Füllvorrichtung umfassen, welche in Förderrichtung hinter der Ausleitungsvorrichtung angeordnet ist.

Alternativ kann der Wandstärkesensor in Förderrichtung betrachtet auch hinter der genannten Ausleitungsvorrichtung angeordnet sein, die dann lediglich die von der Inspektionsvorrichtung als fehlerhaft klassifizierten Behälter ausleitet. Eine weitere hinter dem Wandstärkesensor vorgesehene Ausleitungsvorrichtung ist dann lediglich zur Ausleitung der vom Prüfsystem als instabil klassifizierten Behälter vorgesehen. Dies hat den Vorteil, dass die als instabil klassifizierten Behälter getrennt von den als fehlerhaft klassifizierten Behältern ausgeleitet werden. Die als instabil klassifizierten Behälter können somit erneut einem anderen Füllvorgang zugeleitet werden, welcher beispielsweise geringere Anforderungen an die Behälterstabilität stellt.

Ferner kann die Ausleitungsvorrichtung in Förderrichtung betrachtet auch hinter der genannten Füllvorrichtung angeordnet sein, wobei die Ausleitungsvorrichtung bevorzugt neben den vom Prüfsystem als instabil klassifizierten Behältern auch andere, aus weiteren Gründen wie unvollständiger Befüllung auszusortierende Behälter ausleiten kann. In dem Fall werden die als instabil klassifizierten Behältern von dem Füllprozess einschließlich eines ggf. vorgesehenen Vorspannens ausgeschlossen, d.h. insbesondere ohne Druckbeaufschlagung durch die Füllvorrichtung durchgeleitet.

Bei einer weiteren vorteilhaften Ausführungsform der Abfüllanlage ist eine zumindest mit dem Prüfsystem und der Inspektionsvorrichtung verbundene Behälterverfolgungseinrichtung vorgesehen, welche dazu eingerichtet ist, die jeweils ermittelten Parameter dem zugehörigen Behälter zuzuordnen. Die Behälterverfolgungseinrichtung kann insbesondere dazu genutzt werden, wie vorstehend beschrieben den Prüfalgorithmus anzupassen, um die Erkennung von instabilen Behältern zu verbessern. Die Behälterverfolgungseinrichtung ermöglicht auch, diesen Behälter in weiteren Stationen zu identifizieren, insbesondere bei dem Vorspannen und/oder der Befüllung in der Füllvorrichtung oder nach dem Absetzen aus der Füllvorrichtung. Die Behälterverfolgung kann beispielsweise auf der Grundlage von Förderzeiten, Förderstrecken oder Fördergeschwindigkeiten erfolgen, die entsprechend bekannt sind oder gemessen werden können oder mittels optischer Systeme und ggf. mit Hilfe von Markierungen der Behälter.

Gemäß einer weiteren vorteilhaften Ausführungsform umfasst die Abfüllanlage eine Förderstrecke zum Fördern der zu befüllenden Behälter, wobei das Prüfsystem mehrere Sensorköpfe umfasst, wobei auf jeder Seite der Förderstrecke wenigstens ein Sensorkopf angeordnet ist.

Weiterhin beschrieben ist eine Verwendung zumindest eines Wandstärkesensors in einer Abfüllanlage zum Abfüllen von Produkten in transparenten Behältern, wobei der Wandstärkesensor dazu eingerichtet ist, zumindest die Wandstärke eines zu befüllenden Behälters zu erfassen, und wobei eine Ausleitung derjenigen Behälter vorgesehen ist, deren Wandstärke einen vorgegebenen Grenzwert unterschreitet. Die Erfindung betrifft insbesondere eine Abfüllanlage, bei welcher die Behälter vor, während und/oder nach der Befüllung mit Druck beaufschlagt sind. Der genannte vorgegebene Grenzwert kann fest definiert sein oder gegebenenfalls noch durch weitere Parameter oder Kriterien mitbestimmt sein, zum Beispiel durch den Verschleißgrad des zu befüllenden Behälters oder den Fülldruck.

Der Wandstärkesensor kann insbesondere so ausgestaltet sein wie der Wandstärkesensor in einem wie oben beschriebenen erfindungsgemäßen Prüfsystem. Vorteilhafte Ausführungsformen des oben beschriebenen Prüfsystems, welche den Wandstärkesensor oder die Abfüllanlage betreffende Merkmale betreffen, definieren dementsprechend sinngemäß auch weitere vorteilhafte Ausgestaltungen der Verwendung.

Die Erfindung wird nachfolgend anhand von Ausführungsbeispielen mit Bezug auf die Zeichnungen beschrieben.
- Fig. 1: zeigt eine schematische Seitenansicht eines Wandstärkesensors für ein Prüfsystem gemäß einem Ausführungsbeispiel;
- Fig. 2: eine schematische Draufsicht einer Förderstrecke einer Abfüllanlage, an welcher mehrere Wandstärkesensoren gemäß dem Ausführungsbeispiel von Fig. 1 angeordnet sind; und
- Fig. 3: ein schematisches Blockdiagramm einer Abfüllanlage mit einem Prüfsystem gemäß einem Ausführungsbeispiel.

Nachfolgend werden für gleiche oder gleichartige Elemente oder Komponenten dieselben Bezugszeichen verwendet.

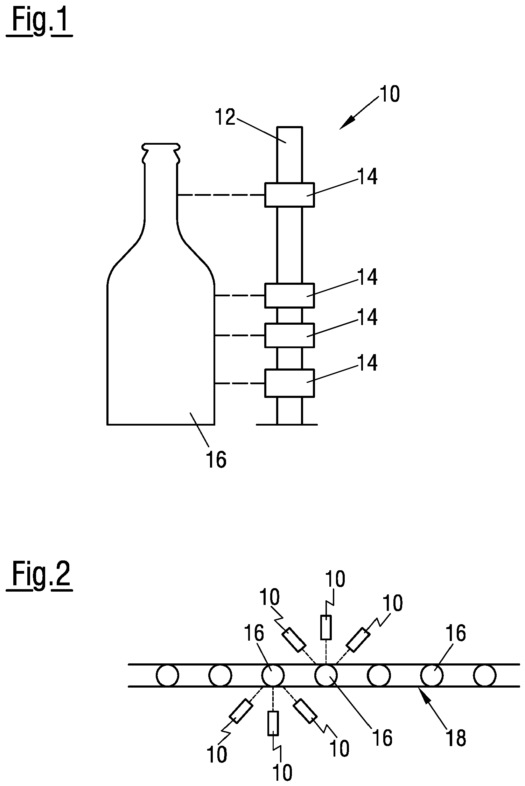

Fig. 1 zeigt einen Wandstärkesensor 10 mit einem sich in vertikaler Richtung erstreckenden Träger 12, an welchem mehrere Sensorköpfe 14 in verschiedenen Höhen angeordnet sind. Die Sensorköpfe 14 sind als Triangulationswandstärkedetektoren oder als konfokale chromatische Wandstärkedetektoren ausgebildet und dazu eingerichtet, entsprechende Messstrahlen entlang einer in Fig. 1 gestrichelt dargestellten Messstrecke in Richtung eines Behälters 16 auszusenden und reflektierte Messstrahlen zu empfangen. Die Sensorköpfe 14 sind derart angeordnet, dass das von ihnen ausgesendete Licht schräg auf die Behälteroberfläche trifft.

In den hier beschriebenen Ausführungsbeispielen sind die zu befüllenden Behälter als Flaschen 16 ausgestaltet. Insofern sind in der folgenden Beschreibung die Begriffe "Behälter" und "Flasche" synonym zu verstehen. Die Erfindung ist aber nicht auf die Verwendung mit Flaschen beschränkt.

Der Wandstärkesensor 10 ist dazu eingerichtet, auf der Grundlage der ausgesendeten und empfangenen Messstrahlen am jeweiligen Auftreffort der Messstrahlen auf die Flasche 16 zumindest eine Wandstärke als Wandungsparameter zu ermitteln.

In Fig. 2 ist eine Förderstrecke 18 dargestellt, welche dazu eingerichtet ist, als Bestandteil einer Abfüllanlage Flaschen 16 zwischen verschiedenen Komponenten der Abfüllanlage zu fördern. Die Flaschen 16 werden vereinzelt und beabstandet voneinander auf der Förderstrecke 18 gefördert. Auf jeder Seite der Förderstrecke 18 sind jeweils drei gemäß Fig. 1 ausgestaltete Wandstärkesensoren 10 angeordnet, wobei jeweils die auf einer Seite angeordneten drei Wandstärkesensoren 10 auf eine jeweilige, in einer bestimmten Messposition angeordnete Flasche 16 ausgerichtet sind. Die verschiedenen Wandstärkesensoren 10 erfassen die Wandstärke der sich an dieser Messposition befindlichen Flasche 16 aus unterschiedlichen Richtungen und somit an unterschiedlichen Winkelpositionen und aufgrund der gestaffelten Höhenanordnung der Sensorköpfe 14 (vgl. Fig. 1) auch an unterschiedlichen Höhenpositionen.

Gemäß einer vorteilhaften Abwandlung können die Abstände der jeweils auf einer Seite der Förderstrecke 18 angeordneten Wandstärkesensoren 10 in Bezug auf eine in der Messposition angeordnete Flasche 16 gleich sein, so dass es auch möglich ist, Abstandswerte für eine Außen- oder Innenwandung der Flasche 16 zu ermitteln und auf der Grundlage von Abweichungen dieser Abstände ein Maß für die Exzentrizität der jeweils geprüften Flasche 16 zu bestimmen.

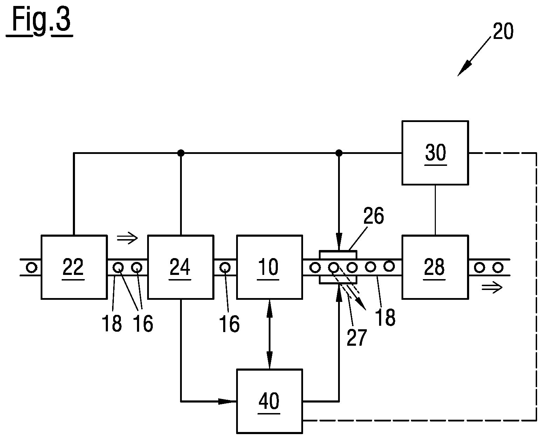

Fig. 3 zeigt schematisch eine Abfüllanlage 20 mit einer Förderstrecke 18, welche dazu eingerichtet ist, durch die Abfüllanlage 20 zu befüllende Flaschen 16 in einer durch Doppelpfeile gekennzeichneten Förderrichtung zu fördern. Entlang der Förderstrecke 18 sind verschiedene Komponenten vorgesehen, welche hier vereinfacht als Blöcke dargestellt sind.

Die in Förderrichtung geförderten Behälter oder Flaschen 16 gelangen zunächst in eine Behälterreinigungsvorrichtung 22, in der sie gereinigt werden. Die gereinigten Flaschen 16 werden anschließend in eine Inspektionsvorrichtung 24 gefördert, in welcher eine Erkennung von fehlerhaften, d.h. beschädigten und/oder ungenügend gereinigten Flaschen 16 erfolgt. Anschließend gelangen die Flaschen 16 in den Bereich eines Wandstärkesensors 10, welcher dazu eingerichtet ist, zumindest die Wandstärke einer zu prüfenden Flasche 16 zu erfassen und zumindest einen die Wandstärke repräsentierenden Wandungsparameter in Form eines Messwerts auszugeben. Der Wandstärkesensor 10 ist hier lediglich symbolisch als ein einziger Sensor dargestellt. Es versteht sich, dass an seiner Stelle auch eine Anordnung von mehreren Wandstärkesensoren 10 entsprechend dem Beispiel von Fig. 2 vorgesehen sein kann.

Der Wandstärkesensor 10 und die Auswerteeinheit 40 bilden ein Prüfsystem zur Prüfung von zu befüllenden transparenten Behältern 16 zur Identifizierung von instabilen Behältern.

Der oder die Wandungsparameter werden an eine Auswerteeinheit 40 übermittelt, welche zusätzlich mit der Inspektionsvorrichtung 24 verbunden ist, um von der Inspektionsvorrichtung 24 zumindest einen Behälterparameter, beispielsweise einen Verschleißparameter wie den Zerkratzungsgrad oder einen Beschädigungsparameter zu empfangen. Die Auswerteeinheit 40 ist dazu eingerichtet, auf der Grundlage des zumindest einen Wandungsparameters und zusätzlich auf der Grundlage des zumindest einen Behälterparameters unter Anwendung eines Prüfalgorithmus die zu prüfende Flasche 16 hinsichtlich ihrer Stabilität zu klassifizieren und ein Instabilitätssignal auszugeben, wenn die geprüfte Flasche 16 als instabil klassifiziert wurde.

Das Instabilitätssignal wird in Form eines Ausleitungssignals an eine an der Förderstrecke 18 angeordnete Ausleitungsvorrichtung 26 übermittelt, welche ein Ausleiten einer als instabil klassifizierten Flasche 16 veranlasst (schematisch durch die gestrichelten Linien 27 dargestellt).

Falls die Inspektionsvorrichtung 24 einen fehlerhaften Behälter detektiert hat, kann diese ebenfalls ein entsprechendes Ausleitungssignal direkt oder indirekt über die Steuereinheit 30 an die Ausleitungsvorrichtung 26 übermitteln. Die Ausleitungsvorrichtung 26 kann somit sowohl von der Inspektionsvorrichtung 24 als auch von der Auswerteeinheit 40 angesteuert werden.

Nicht ausgeleitete Behälter oder Flaschen 16 werden zu einer Füllvorrichtung 28 gefördert, welche die zu befüllenden Flaschen 16 ggf. vorspannt und mit dem einzufüllenden Produkt beispielsweise einer Flüssigkeit, insbesondere einem Getränk, befüllt.

An der Füllvorrichtung 28 kann gemäß einer Abwandlung eine Detektionsvorrichtung vorgesehen sein, welche dazu eingerichtet ist, platzende Flaschen 16 zu detektieren.

Die Behälterreinigungsvorrichtung 22, die Inspektionsvorrichtung 24, die Ausleitungsvorrichtung 26 und die Füllvorrichtung 28 sind über Leitungen mit einer Steuereinheit 30 verbunden, welche die Abfüllanlage 20 steuert und hierfür sowohl Signale, insbesondere Steuer- oder Messsignale, von den verbundenen Komponenten empfangen als auch an diese übermitteln kann.

Gemäß einer Abwandlung kann die Auswerteeinheit 40 zusätzlich mit der Steuereinheit 30 der Abfüllanlage zum Austausch von Steuer- oder Messsignalen verbunden sein, was in Fig. 3 durch eine gestrichelte Linie repräsentiert ist. Die Auswerteeinheit 40 kann insbesondere von der Steuereinheit 30 weitere Parameter empfangen, beispielsweise einen oder mehrere Prozessparameter, wie beispielsweise den Reinigungsmitteldruck und/oder die Reinigungsmitteltemperatur der Behälterreinigungsvorrichtung 22 und/oder den Vorspanndruck, den Fülldruck und/oder die Fülltemperatur der Füllvorrichtung 28. Der oder die Prozessparameter können im Prüfalgorithmus zusätzlich bei der Klassifizierung des zu prüfenden Behälters 16 bezüglich seiner Stabilität berücksichtigt werden.

Der oder die von der Inspektionsvorrichtung 24 ermittelten Behälterparameter können gegebenenfalls auch alternativ oder zusätzlich indirekt über die Steuereinheit 30 an die Auswerteeinheit 40 übermittelt werden.

Gemäß einer weiteren Abwandlung kann die Abfüllanlage 20 zusätzlich eine Behälterverfolgungseinrichtung (nicht dargestellt) umfassen, welche es ermöglicht, einen individuellen Behälter 16 beim Durchlauf durch die verschiedenen Komponenten der Abfüllanlage 20 und insbesondere auch durch den Wandstärkesensor 10 zu verfolgen und diesem Behälter die jeweils ermittelten Parameter einschließlich eines gegebenenfalls in der Füllvorrichtung 28 ermittelten Schadereignisses zuzuordnen.

Das von dem Wandstärkesensor 10 und der Auswerteeinheit 40 gebildete Prüfsystem kann in die Abfüllanlage 20 integriert sein oder ein eigenständiges System bilden.

Gemäß einer weiteren Abwandlung kann das Prüfsystem zusammen mit der Inspektionsvorrichtung 24 auch ein integriertes Inspektionssystem bilden.

Die Prüfung der zu befüllenden transparenten Behälter durch das Prüfsystem unter Anwendung eines Prüfalgorithmus und insbesondere deren Klassifizierung als stabil oder instabil erfolgt in der eingangs beschriebenen Weise.

Durch die Prüfung der Behälter 16 auf Stabilität unter Berücksichtigung der Wandstärke wird die Wahrscheinlichkeit für ein Auftreten von unerwünschten Behälterplatzern während des Füllvorgangs vermindert.

### Bezugszeichenliste

- 10: Wandstärkesensor
- 12: Träger
- 14: Sensorkopf
- 16: Behälter, Flasche
- 18: Förderstrecke
- 20: Abfüllanlage
- 22: Behälterreinigungsvorrichtung
- 24: Inspektionsvorrichtung
- 26: Ausleitungsvorrichtung
- 27: Ausleitung
- 28: Füllvorrichtung
- 30: Steuereinheit
- 40: Auswerteeinheit

## Patentansprüche

1. Prüfsystem zur Prüfung von zu befüllenden transparenten Behältern (16) in einer Abfüllanlage (20), wobei die Prüfung dazu vorgesehen ist, instabile Behälter (16) vor dem Befüllen zu identifizieren, mit
zumindest einem Wandstärkesensor (10), welcher dazu eingerichtet ist, zumindest die Wandstärke eines zu prüfenden Behälters (16) zu erfassen und zumindest einen die Wandstärke repräsentierenden Wandungsparameter auszugeben,
einer Auswerteeinheit (40), welche mit dem zumindest einen Wandstärkesensor (10) gekoppelt ist und mit der Abfüllanlage (20) koppelbar ist, wobei die Auswerteeinheit (40) dazu eingerichtet ist, von dem zumindest einen Wandstärkesensor (10) den zumindest einen Wandungsparameter und von der Abfüllanlage (20) zumindest einen Behälterparameter und/oder zumindest einen Prozessparameter zu empfangen, auf der Grundlage des zumindest einen Wandungsparameters und zusätzlich auf der Grundlage des zumindest einen Behälterparameters und/oder des zumindest einen Prozessparameters unter Anwendung eines Prüfalgorithmus den zu prüfenden Behälter (16) hinsichtlich seiner Stabilität zu klassifizieren und ein Instabilitätssignal auszugeben, wenn der geprüfte Behälter (16) als instabil klassifiziert wurde,
wobei die Auswerteeinheit (40) mit einem Schaderkennungssystem verbunden ist, welches dazu eingerichtet ist, einen durch ein Befüllen eines Behälters (16) verursachten Behälterschaden als Schadereignis zu erfassen, und
wobei die Auswerteeinheit (40) dazu eingerichtet ist, den Prüfalgorithmus auf der Grundlage eines einzelnen Schadereignisses oder einer Mehrzahl von Schadereignissen derart anzupassen, dass die Erkennung von instabilen Behältern (16) verbessert ist.

2. Prüfsystem nach Anspruch 1,
**dadurch gekennzeichnet,**
**dass** der Wandstärkesensor (10) zumindest einen Sensorkopf (14) umfasst, welcher als Triangulationswandstärkendetektor oder als konfokaler chromatischer Wandstärkendetektor ausgebildet ist, und oder
**dass** der Wandstärkesensor (10) mehrere Sensorköpfe (14) umfasst, welche voneinander beabstandet angeordnet sind, um die Wandstärke des zu prüfenden Behälters (16) an verschiedenen Positionen, insbesondere an verschiedenen Höhenpositionen zu erfassen, und/oder dass der Wandstärkesensor (10) dazu eingerichtet ist, zumindest die Wandstärke des zu prüfenden Behälters (16) an verschiedenen Umfangspositionen zu erfassen.

3. Prüfsystem nach einem der vorhergehenden Ansprüche,
**dadurch gekennzeichnet,**
**dass** der Wandstärkesensor (10) dazu eingerichtet ist, an den verschiedenen Umfangspositionen jeweils zusätzlich den Abstand zwischen dem Wandstärkesensor (10) und einer Innen- und/oder Außenwandung des zu prüfenden Behälters (16) zu erfassen, und
**dass** die Auswerteeinheit (40) oder der Wandstärkesensor (10) dazu eingerichtet ist, auf der Grundlage der erfassten Abstände zumindest einen weiteren Wandungsparameter zu ermitteln, welcher das Maß der Exzentrizität der Innen- und/oder Außenwandung repräsentiert.

4. Prüfsystem nach einem der vorhergehenden Ansprüche,
**dadurch gekennzeichnet,**
**dass** der Wandstärkesensor (10) zumindest einen Sensorkopf (14) umfasst, welcher entlang einer Kreisbahn oder eines Kreisbahnabschnitts schwenkbar ist, wobei der Mittelpunkt der Kreisbahn oder des Kreisbahnabschnitts auf einer vertikalen Symmetrieachse des zu prüfenden Behälters (16) angeordnet ist.

5. Prüfsystem nach einem der vorhergehenden Ansprüche,
**dadurch gekennzeichnet,**
**dass** die Auswerteeinheit (40) dazu eingerichtet ist, den zu prüfenden Behälter (16) zusätzlich auf der Grundlage eines Behältertypparameters zu klassifizieren, welcher von der Abfüllanlage (20) und/oder einer mit dem Prüfsystem verbundenen Eingabevorrichtung empfangen wurde.

6. Prüfsystem nach einem der vorhergehenden Ansprüche,
**dadurch gekennzeichnet,**
**dass** in dem Prüfalgorithmus für jeden der bei der Klassifizierung zu berücksichtigenden Parameter eine jeweilige Grenzwertüberprüfung durchgeführt wird, wobei jeweils geprüft wird, ob ein oder mehrere für den jeweiligen Parameter definierte Grenzwerte über- oder unterschritten wurden, und dass das Klassifizieren des zu prüfenden Behälters (16) hinsichtlich seiner Stabilität auf der Grundlage einer regelbasierten Kombination der Ergebnisse der durchgeführten Grenzwertüberprüfungen erfolgt.

7. Prüfsystem nach Anspruch 6,
**dadurch gekennzeichnet,**
**dass** ein jeweiliger Grenzwert für eine Grenzwertüberprüfung eines bestimmten Parameters auf der Grundlage eines Wertes eines anderen Parameters oder eines Ergebnisses der Grenzwertüberprüfung eines anderen Parameters definiert wird.

8. Prüfsystem nach einem der vorhergehenden Ansprüche,
**dadurch gekennzeichnet,**
**dass** die Auswerteeinheit (40) dazu eingerichtet ist, den Prüfalgorithmus auf der Grundlage einer aus einer Mehrzahl von Schadereignissen und einer Gesamtzahl von befüllten Behältern (16) ermittelten Schadquote anzupassen.

9. Prüfsystem nach einem der vorhergehenden Ansprüche,
**dadurch gekennzeichnet,**
**dass** das Anpassen des Prüfalgorithmus zusätzlich auf der Grundlage einer Ausleitungsquote erfolgt, welche das Verhältnis der Anzahl von als instabil klassifizierten Behältern (16) zu der Gesamtzahl an überprüften oder befüllten Behältern (16) angibt.

10. Prüfsystem nach einem der vorhergehenden Ansprüche,
**dadurch gekennzeichnet,**
**dass** das Prüfsystem in ein Inspektionssystem zur Inspektion von zu befüllenden transparenten Behältern integriert ist, welches zusätzlich zu dem Prüfsystem zumindest eine Inspektionsvorrichtung (24) umfasst, welche dazu eingerichtet ist, zumindest einen Behälterparameter und/oder zumindest einen weiteren, den Zustand des Behälters (16) charakterisierenden Parameter zu ermitteln.

11. Abfüllanlage (20) zum Abfüllen von Produkten in Behältern (16) umfassend ein Prüfsystem zur Prüfung der zu befüllenden Behälter (16) nach einem der vorhergehenden Ansprüche.

12. Abfüllanlage (20) nach Anspruch 11,
**dadurch gekennzeichnet,**
**dass** die Abfüllanlage (20) eine Förderstrecke (18) zum Fördern der zu befüllenden Behälter (16) in einer Förderrichtung umfasst, an welcher in einer in Förderrichtung verlaufenden Reihenfolge zumindest eine Inspektionsvorrichtung (24) zur Inspektion der zu befüllenden Behälter (16), welche dazu eingerichtet ist, zumindest einen Behälterparameter und/oder zumindest einen weiteren, einen Zustand des Behälters (16) charakterisierenden Parameter zu ermitteln und auf der Grundlage des Behälterparameters und/oder des weiteren Parameters fehlerhafte Behälter (16) zu identifizieren, der Wandstärkesensor (10) des Prüfsystems und eine Ausleitungsvorrichtung zum Ausleiten fehlerhafter und/oder instabiler Behälter (16) aus der Förderstrecke (18) angeordnet ist.

13. Abfüllanlage (20) nach Anspruch 12,
**dadurch gekennzeichnet,**
**dass** eine zumindest mit dem Prüfsystem und der Inspektionsvorrichtung (24) verbundene Behälterverfolgungseinrichtung vorgesehen ist, welche dazu eingerichtet ist, die jeweils ermittelten Parameter dem zughörigen Behälter (16) zuzuordnen.

14. Abfüllanlage (20) nach einem der Ansprüche 11 bis 13,
**dadurch gekennzeichnet,**
**dass** die Abfüllanlage (20) eine Förderstrecke (18) zum Fördern der zu befüllenden Behälter (16) umfasst, und
**dass** das Prüfsystem mehrere Sensorköpfe (14) umfasst, wobei auf jeder Seite der Förderstrecke (18) wenigstens ein Sensorkopf (14) angeordnet ist.

## Claims

1. A checking system for checking transparent containers (16) to be filled in a filling system (20), wherein the check is provided to identify unstable containers (16) prior to the filling, comprising
at least one wall thickness sensor (10), which is configured to detect at least the wall thickness of a container (16) to be checked and to output at least one wall parameter representing the wall thickness,
an evaluation unit (40) which is coupled to the at least one wall thickness sensor (10) and which can be coupled to the filling system (20),
wherein the evaluation unit (40) is configured to receive the at least one wall parameter from the at least one wall thickness sensor (10) and at least one container parameter and/or at least one process parameter from the filling system (20), to classify the container (16) to be checked with regard to its stability on the basis of the at least one wall parameter and additionally on the basis of the at least one container parameter and/or the at least one process parameter using a checking algorithm and to output an instability signal if the checked container (16) has been classified as unstable, wherein the evaluation unit (40) is connected to a damage recognition system which is configured to detect container damage caused by a filling of a container (16) as a damage event, and
wherein the evaluation unit (40) is configured to adapt the checking algorithm on the basis of a single damage event or a plurality of damage events such that the recognition of unstable containers (16) is improved.

2. A checking system in accordance with claim 1,
**characterized in that**
the wall thickness sensor (10) comprises at least one sensor head (14) which is configured as a triangulation wall thickness detector or as a confocal chromatic wall thickness detector, and or
**in that** the wall thickness sensor (10) comprises a plurality of sensor heads (14) which are arranged spaced apart from one another in order to detect the wall thickness of the container (16) to be checked at different positions, in particular at different height positions, and/or
**in that** the wall thickness sensor (10) is configured to detect at least the wall thickness of the container (16) to be checked at different peripheral positions.

3. A checking system in accordance with one of the preceding claims, **characterized in that**
the wall thickness sensor (10) is configured to additionally detect the spacing between the wall thickness sensor (10) and an inner and/or outer wall of the container (16) to be checked at the different peripheral positions in each case, and
**in that** the evaluation unit (40) or the wall thickness sensor (10) is configured to determine at least one further wall parameter, which represents the degree of eccentricity of the inner and/or outer wall, on the basis of the detected spacings.

4. A checking system in accordance with any one of the preceding claims, **characterized in that**
the wall thickness sensor (10) comprises at least one sensor head (14) which can be pivoted along a circular path or a circular path section, with the center of the circular path or the circular path section being arranged on a vertical axis of symmetry of the container (16) to be checked.

5. A checking system in accordance with any one of the preceding claims, **characterized in that**
the evaluation unit (40) is configured to classify the container (16) to be checked additionally on the basis of a container type parameter which was received from the filling system (20) and/or an input apparatus connected to the checking system.

6. A checking system in accordance with any one of the preceding claims, **characterized in that**,
in the checking algorithm, a respective limit value check is performed for each of the parameters to be taken into account in the classification, wherein it is in each case checked whether one or more limit values defined for the respective parameter have been exceeded or fallen below, and **in that** the classification of the container (16) to be checked with regard to its stability takes place on the basis of a rule-based combination of the results of the limit value checks performed.

7. A checking system in accordance with claim 6,
**characterized in that**
a respective limit value for a limit value check of a specific parameter is defined on the basis of a value of another parameter or a result of the limit value check of another parameter.

8. A checking system in accordance with any one of the preceding claims, **characterized in that**
the evaluation unit (40) is configured to adapt the checking algorithm on the basis of a damage rate determined from a plurality of damage events and a total number of filled containers (16).

9. A checking system in accordance with any one of the preceding claims, **characterized in that**
the adaptation of the checking algorithm additionally takes place on the basis of a discharge rate which indicates the ratio of the number of containers (16) classified as unstable to the total number of checked or filled containers (16).

10. A checking system in accordance with any one of the preceding claims, **characterized in that**
the checking system is integrated into an inspection system for inspecting transparent containers to be filled, said inspection system comprising, in addition to the checking system, at least one inspection apparatus (24) which is configured to determine at least one container parameter and/or at least one further parameter characterizing the condition of the container (16).

11. A filling system (20) for filling products in containers (16) comprising a checking system for checking the containers (16) to be filled in accordance with any one of the preceding claims.

12. A filling system (20) in accordance with claim 11,
**characterized in that**
the filling system (20) comprises a conveying path (18) for conveying the containers (16) to be filled in a conveying direction, at which conveying path (18) at least one inspection apparatus (24) for inspecting the containers (16) to be filled, which is configured to determine at least one container parameter and/or at least one further parameter characterizing a condition of the container (16) and to identify defective containers (16) on the basis of the container parameter and/or the further parameter, the wall thickness sensor (10) of the checking system and a discharge apparatus for discharging defective and/or unstable containers (16) from the conveying path (18) are arranged in an order extending in the conveying direction.

13. A filling system (20) in accordance with claim 12,
**characterized in that**
a container tracking device is provided which is connected at least to the checking system and the inspection apparatus (24) and which is configured to assign the respective determined parameters to the associated container (16).

14. A filling system (20) in accordance with any one of the claims 11 to 13, **characterized in that**
the filling system (20) comprises a conveying path (18) for conveying the containers (16) to be filled, and
**in that** the inspection system comprises a plurality of sensor heads (14), with at least one sensor head (14) being arranged on each side of the conveying path (18).

## Revendications

1. Système de contrôle pour contrôler des récipients transparents (16) à remplir dans une installation de remplissage (20), le contrôle étant prévu pour identifier des récipients instables (16) avant de les remplir, comprenant au moins un capteur d'épaisseur de paroi (10) conçu pour détecter au moins l'épaisseur de paroi d'un récipient (16) à contrôler et pour émettre au moins un paramètre de paroi représentant l'épaisseur de paroi,
une unité d'évaluation (40) qui est couplée audit au moins un capteur d'épaisseur de paroi (10) et qui peut être couplée à l'installation de remplissage (20),
l'unité d'évaluation (40) étant conçue pour recevoir ledit au moins un paramètre de paroi dudit au moins un capteur d'épaisseur de paroi (10) et au moins un paramètre de récipient et/ou au moins un paramètre de processus de l'installation de remplissage (20), pour classifier le récipient (16) à contrôler quant à sa stabilité sur la base dudit au moins un paramètre de paroi et en supplément sur la base dudit au moins un paramètre de récipient et/ou dudit au moins un paramètre de processus, en utilisant un algorithme de contrôle, et pour émettre un signal d'instabilité si le récipient (16) contrôlé a été classifié comme instable,
l'unité d'évaluation (40) étant reliée à un système de détection de dommages conçu pour détecter, en tant qu'événement dommageable, un dommage de récipient provoqué par un remplissage d'un récipient (16), et l'unité d'évaluation (40) étant conçue pour adapter l'algorithme de contrôle sur la base d'un seul événement dommageable ou d'une pluralité d'événements dommageables, de manière à améliorer la détection de récipients (16) instables.

2. Système de contrôle selon la revendication 1,
**caractérisé en ce que**
le capteur d'épaisseur de paroi (10) comprend au moins une tête de capteur (14) réalisée sous forme de détecteur d'épaisseur de paroi par triangulation ou sous forme de détecteur d'épaisseur de paroi chromatique confocal, et/ou
**en ce que** le capteur d'épaisseur de paroi (10) comprend plusieurs têtes de capteur (14) disposées à distance les unes des autres afin de détecter l'épaisseur de paroi du récipient (16) à contrôler à différentes positions, en particulier à différentes positions en hauteur, et/ou **en ce que** le capteur d'épaisseur de paroi (10) est conçu pour détecter au moins l'épaisseur de paroi du récipient (16) à contrôler à différentes positions périphériques.

3. Système de contrôle selon l'une des revendications précédentes, **caractérisé en ce que**
le capteur d'épaisseur de paroi (10) est conçu pour détecter en supplément, aux différentes positions périphériques, la distance respective entre le capteur d'épaisseur de paroi (10) et une paroi intérieure et/ou extérieure du récipient (16) à contrôler, et
**en ce que** l'unité d'évaluation (40) ou le capteur d'épaisseur de paroi (10) est conçu(e) pour déterminer, sur la base des distances détectées, au moins un autre paramètre de paroi qui représente le degré de l'excentricité de la paroi intérieure et/ou extérieure.

4. Système de contrôle selon l'une des revendications précédentes, **caractérisé en ce que**
le capteur d'épaisseur de paroi (10) comprend au moins une tête de capteur (14) qui peut pivoter le long d'une trajectoire circulaire ou d'une section de trajectoire circulaire, le centre de la trajectoire circulaire ou de la section de trajectoire circulaire étant disposé sur un axe de symétrie vertical du récipient (16) à contrôler.

5. Système de contrôle selon l'une des revendications précédentes, **caractérisé en ce que**
l'unité d'évaluation (40) est conçue pour classifier le récipient (16) à contrôler en supplément sur la base d'un paramètre de type de récipient qui a été reçu de l'installation de remplissage (20) et/ou d'un dispositif d'entrée relié au système de contrôle.

6. Système de contrôle selon l'une des revendications précédentes, **caractérisé en ce que**
dans l'algorithme de contrôle, une vérification respective des valeurs limites est effectuée pour chacun des paramètres à prendre en compte lors de la classification, en vérifiant respectivement si une ou plusieurs valeurs limites définies pour le paramètre respectif ont été franchies vers le haut ou vers le bas, et
**en ce que** la classification du récipient (16) à contrôler quant à sa stabilité est effectuée sur la base d'une combinaison, basée sur des règles, des résultats des vérifications effectuées des valeurs limites.

7. Système de contrôle selon la revendication 6,
**caractérisé en ce que**
une valeur limite respective pour une vérification des valeurs limites d'un certain paramètre est définie sur la base d'une valeur d'un autre paramètre ou d'un résultat de la vérification des valeurs limites d'un autre paramètre.

8. Système de contrôle selon l'une des revendications précédentes, **caractérisé en ce que**
l'unité d'évaluation (40) est conçue pour adapter l'algorithme de contrôle sur la base d'un taux de dommages déterminé à partir d'une pluralité d'événements dommageables et d'un nombre total de récipients (16) remplis.

9. Système de contrôle selon l'une des revendications précédentes, **caractérisé en ce que**
l'adaptation de l'algorithme de contrôle se fait en supplément sur la base d'un taux d'évacuation qui indique le rapport entre le nombre de récipients (16) classifiés comme instables et le nombre total de récipients (16) contrôlés ou remplis.

10. Système de contrôle selon l'une des revendications précédentes, **caractérisé en ce que**
le système de contrôle est intégré dans un système d'inspection pour l'inspection de récipients transparents à remplir, lequel comprend, en supplément au système de contrôle, au moins un dispositif d'inspection (24) conçu pour déterminer au moins un paramètre de récipient et/ou au moins un autre paramètre caractérisant l'état du récipient (16).

11. Installation de remplissage (20) pour remplir des récipients (16) avec des produits, comprenant un système de contrôle pour contrôler les récipients (16) à remplir, selon l'une des revendications précédentes.

12. Installation de remplissage (20) selon la revendication 11,
**caractérisée en ce que**
l'installation de remplissage (20) comprend une voie de convoyage (18) pour convoyer les récipients (16) à remplir dans une direction de convoyage, sur laquelle sont montés, dans un ordre selon la direction de convoyage, au moins un dispositif d'inspection (24) pour inspecter les récipients (16) à remplir, qui est conçu pour déterminer au moins un paramètre de récipient et/ou au moins un autre paramètre caractérisant un état du récipient (16) et pour identifier des récipients (16) défectueux sur la base du paramètre de récipient et/ou de l'autre paramètre, le capteur d'épaisseur de paroi (10) du système de contrôle et un dispositif d'évacuation pour évacuer des récipients (16) défectueux et/ou instables hors de la voie de convoyage (18).

13. Installation de remplissage (20) selon la revendication 12, **caractérisée en ce que**
il est prévu un dispositif de suivi de récipients relié au moins au système de contrôle et au dispositif d'inspection (24), lequel est conçu pour attribuer les paramètres respectifs déterminés au récipient (16) associé.

14. Installation de remplissage (20) selon l'une des revendications 11 à 13, **caractérisée en ce que**
l'installation de remplissage (20) comprend une voie de convoyage (18) pour convoyer les récipients (16) à remplir, et
**en ce que** le système de contrôle comprend plusieurs têtes de capteur (14), au moins une tête de capteur (14) étant disposée de chaque côté de la voie de convoyage (18).
